(19) **Europäisches Patentamt**
**European Patent Office**
**Office européen des brevets**

(11) **EP 4 387 356 A1**

(12) **EUROPEAN PATENT APPLICATION**
published in accordance with Art. 153(4) EPC

(43) Date of publication:
**19.06.2024 Bulletin 2024/25**

(21) Application number: **22860286.8**

(22) Date of filing: **12.08.2022**

(51) International Patent Classification (IPC):
**H04W 72/04** (2023.01)

(52) Cooperative Patent Classification (CPC):
**H04W 72/04; H04W 72/0446; H04W 72/541**

(86) International application number:
**PCT/CN2022/112255**

(87) International publication number:
**WO 2023/024940 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.08.2021 CN 202110967101**
**30.09.2021 CN 202111166841**

(71) Applicant: **Huawei Technologies Co., Ltd.
Shenzhen, Guangdong 518129 (CN)**

(72) Inventors:
• **WANG, Bichai
Shenzhen, Guangdong 518129 (CN)**
• **LI, Xueru
Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **UWB COMMUNICATION METHOD, COMMUNICATION APPARATUS AND SYSTEM**

(57) This application discloses a UWB communication method, a communication apparatus, and a system, and relates to the wireless communication field. The method includes: UWB devices in a communication system may simultaneously send UWB physical frames. The UWB devices use a same specified frame structure. A specified position in the specified frame structure may include a first time interval. In this way, when there is a time difference between frame boundaries for performing transmitting of the UWB devices in the communication system, interference generated because an SHR part in a UWB physical frame overlaps a PHR or PSDU part in a UWB physical frame sent by another UWB device in transmission time when a specified UWB device sends the UWB physical frame can be avoided based on the first time interval. This improves communication efficiency of the UWB devices and improves accuracy of data exchange between the UWB devices.

FIG. 2

**Description**

This application claims priorities to Chinese Patent Application No. 202110967101.6, filed with the China National Intellectual Property Administration on August 23, 2021, and entitled "ULTRA-WIDEBAND UWB DATA TRANSMISSION METHOD", and to Chinese Patent Application No. 202111166841.6, filed with the China National Intellectual Property Administration on September 30, 2021, and entitled "UWB COMMUNICATION METHOD, COMMUNICATION APPARATUS, AND SYSTEM", both of which are incorporated herein by reference in their entireties.

**TECHNICAL FIELD**

This application relates to the wireless communication field, and in particular, to a UWB communication method, a communication apparatus, and a system.

**BACKGROUND**

An ultra-wideband (ultra-wideband, UWB) wireless communication technology is a wireless carrier communication technology that occupies a wide spectrum range and uses a nanosecond-level non-sine wave narrow pulse to transmit data. A bandwidth frequency of a UWB is between 3.1 GHz and 10.6 GHz. A -10 dB bandwidth of an electronic device using the UWB communication technology is at least 500 MHz, and power spectrum density cannot exceed -41 dBm/MHz. A UWB system has good concealment and generally does not interfere with a narrowband system. Therefore, the UWB is applicable to high-speed and short-distance wireless personal communication.

However, a communication system including a UWB device is mainly an asynchronous communication system. Different UWB frame structures are used between different device pairs or device groups, and a moment at which a UWB physical frame is sent is also random. Therefore, a synchronization header (synchronization header, SHR) in a UWB physical frame sent by a specified electronic device collides with an SHR, a physical layer header (physical layer header, PHR), or a physical layer service data unit (physical layer service data unit, PSDU) in a UWB communication frame sent by another device, and large interference is generated. Consequently, communication performance and/or positioning performance of the UWB device are/is poor, and a user requirement cannot be met.

**SUMMARY**

This application provides a UWB communication method, a communication apparatus, and a system. According to technical solutions provided in this application, interference generated because an SHR part in a UWB physical frame overlaps a PHR or PSDU part in a UWB physical frame sent by another UWB device in transmission time when a specified UWB device sends the UWB physical frame can be avoided. This improves communication efficiency of the UWB device and improves accuracy of data exchange between UWB devices.

According to a first aspect, this application provides a UWB communication method. The method may include: receiving a first physical frame; determining, based on the first physical frame, a frame boundary for transmitting a second physical frame, where the second physical frame includes a first synchronization header SHR, a first physical layer header PHR, and a first physical layer service data unit PSDU; and sending the second physical frame based on the frame boundary for transmitting the second physical frame, where there is a first time interval between a sending end moment of the first SHR and a sending start moment of the first PHR. In this way, interference generated because an SHR part in a UWB physical frame overlaps a PHR or PSDU part in a UWB physical frame sent by another UWB device in transmission time when a specified UWB device sends the UWB physical frame is avoided. This improves communication efficiency of the UWB device and improves accuracy of data exchange between UWB devices.

In a possible implementation, there is a first time interval between the frame boundary for transmitting the second physical frame and a sending start moment of the first SHR in the second physical frame. In this way, interference generated because an SHR part in a UWB physical frame overlaps a PHR or PSDU part in a UWB physical frame sent by another UWB device in transmission time when a specified UWB device sends the UWB physical frame is avoided. This improves communication efficiency of the UWB device and improves accuracy of data exchange between UWB devices.

In a possible implementation, a synchronization SYNC field in the first SHR includes a synchronization sequence and a ranging sequence. The synchronization sequence is different from the ranging sequence. There is a first time interval between a sending end moment of the synchronization sequence and a sending start moment of the ranging sequence. In this way, interference between the synchronization sequence and the ranging sequence can be avoided, and accuracy of decoding the synchronization sequence and the ranging sequence by a receiving device is improved.

In a possible implementation, duration of the first time interval is preset duration, or duration determined based on time interval indication information in the first physical frame. In this way, the duration of the first time interval can be set more flexibly.

In a possible implementation, the second physical frame is generated based on a preset frame structure of a first channel. The sending the second physical frame based on the frame boundary for transmitting the second physical frame specifically includes: generating the second physical frame based on the preset frame structure of the first channel; and sending the second physical frame on the first channel based on the frame boundary for transmitting the second physical frame. In this way, UWB devices in a communication system can use a same frame structure, so that interference generated because sending times overlap when each UWB device sends a UWB physical frame can be better avoided based on the first time interval.

In a possible implementation, the second physical frame is determined based on the first physical frame. A synchronization header SHR in the first physical frame includes a start-of-frame delimiter SFD field. The SFD field is generated based on a preamble symbol and a first spreading code. The sending the second physical frame based on the frame boundary for transmitting the second physical frame specifically includes: determining a first frame structure based on a mapping relationship between the first spreading code and a frame structure, where different spreading codes correspond to different frame structures; generating the second physical frame based on the first frame structure; and sending the second physical frame based on the frame boundary for transmitting the second physical frame. In this way, UWB devices in the communication system can use a same frame structure, so that interference generated because sending times overlap when each UWB device sends a UWB physical frame can be better avoided based on the first time interval.

In a possible implementation, the second physical frame is determined based on the first physical frame. A physical layer header PHR or a physical layer service data unit PSDU in the first physical frame includes a frame structure indication field. The frame structure indication field indicates a first frame structure. The sending the second physical frame based on the frame boundary for transmitting the second physical frame specifically includes: generating the second physical frame based on the first frame structure indicated by the frame structure indication field; and sending the second physical frame based on the frame boundary for transmitting the second physical frame. In this way, UWB devices in the communication system can use a same frame structure, so that interference generated because sending times overlap when each UWB device sends a UWB physical frame can be better avoided based on the first time interval.

In a possible implementation, the first PHR in the second physical frame includes a first sub-PHR and a second sub-PHR. The first sub-PHR has a fixed quantity of bits. The first sub-PHR includes indication information of a frame type and/or all or some of bits in a destination address at which the second physical frame is received. The frame type includes a synchronization frame, a communication frame, a positioning frame, and/or an ACK frame.

In a possible implementation, when the frame type of the second physical frame is the positioning frame, the second physical frame includes a ranging sequence, and the second sub-PHR in the second physical frame includes a sending periodicity of a first service, a bit rate, and/or indication information of a size of data in the first PSDU. The second physical frame is a frame in the first service. The ranging sequence is located after the first PSDU, and there is a first time interval between a sending end moment of the first PSDU and a sending start moment of the ranging sequence.

In a possible implementation, when the frame type of the second physical frame is the communication frame, the second physical frame includes a synchronization sequence, and the second sub-PHR in the second physical frame includes a sending periodicity of a first service, a bit rate, and/or indication information of a size of data in the first PSDU. The second physical frame is a frame in the first service.

In a possible implementation, when the frame type of the second physical frame is the ACK frame, the second physical frame does not include the second sub-PHR, or the second sub-PHR in the second physical frame includes indication information of a size of data in the first PSDU and/or a bit rate.

In a possible implementation, when the frame type of the second physical frame is the synchronization frame, a frame structure of the second physical frame is the same as a frame structure of the first physical frame, the second sub-PHR includes a system frame number, a sending periodicity of the synchronization frame, and/or resource configuration information, and the resource configuration information indicates a time domain resource used for communication and a time domain resource used for positioning.

In a possible implementation, when the frame type of the second physical frame is the synchronization frame, a frame structure of the second physical frame is the same as a frame structure of the first physical frame, the second sub-PHR includes a system frame number and/or a sending periodicity of the synchronization frame, the first PSDU includes resource configuration information, and the resource configuration information indicates a time domain resource used for communication and a time domain resource used for positioning.

In a possible implementation, duration for sending the first PSDU is less than first preset duration.

In a possible implementation, the first PHR or the first PSDU in the second physical frame includes first preamble symbol indication information. The first preamble symbol indication information includes a quantity of repetitions of a preamble symbol in a SYNC field in a third physical frame and a quantity of repetitions of a preamble symbol in a SYNC field in a fourth physical frame. The method further includes: sending the third physical frame, where the third physical frame is sent after the second physical frame; and sending the fourth physical frame, where a frame structure of the third physical frame and a frame structure of the fourth physical frame are the first frame structure, and the fourth physical frame is sent after the third physical frame. In this way, overheads of preamble symbols in the third physical frame and the fourth physical frame can be reduced, and efficiency of sending a physical frame by the UWB device can be improved.

In a possible implementation, the first PHR or the first PSDU in the second physical frame includes second preamble symbol indication information. The second preamble symbol indication information includes a quantity of repetitions of a preamble symbol in a SYNC field in a third physical frame. The method further includes: sending the third physical frame, where a frame structure of the third physical frame is the first frame structure, a second PHR or a second PSDU in the third physical frame includes third preamble symbol indication information, the third preamble symbol indication information includes a quantity of repetitions of a preamble symbol in a SYNC field in a fourth physical frame, and the third physical frame is sent after the second physical frame; and sending the fourth physical frame, where a frame structure of the fourth physical frame is the first frame structure, and the fourth physical frame is sent after the third physical frame. In this way, overheads of preamble symbols in the third physical frame and the fourth physical frame can be reduced, and efficiency of sending a physical frame by the UWB device can be improved.

In a possible implementation, the first time interval does not include any data field.

In a possible implementation, the first time interval does not include any data field; or the first time interval includes a first padding field. The first padding field includes a preamble symbol in the synchronization sequence or a preamble symbol in the ranging sequence. Sending duration of the first padding field is the first time interval.

In a possible implementation, the first time interval does not include any data field; or the first time interval includes a second padding field. The second padding field includes a preamble symbol in the ranging sequence. Sending duration of the second padding field is the first time interval.

According to a second aspect, this application provides a communication apparatus. The communication apparatus may include a transceiver unit, a processing unit, and one or more programs. When the processing unit executes the one or more programs, the communication apparatus is enabled to perform the method in any possible implementation of the first aspect. In this way, interference generated because an SHR part in a UWB physical frame overlaps a PHR or PSDU part in a UWB physical frame sent by another communication apparatus in transmission time when the communication apparatus sends the UWB physical frame can be avoided. This improves communication efficiency of the communication apparatus and improves accuracy of data exchange between communication apparatuses.

According to a third aspect, this application provides a computer-readable storage medium. The computer-readable storage medium stores instructions. When the instructions are run on a computer, the computer is enabled to perform the method in any possible implementation of the first aspect. In this way, interference generated because an SHR part in a UWB physical frame overlaps a PHR or PSDU part in a UWB physical frame sent by another computer in transmission time when the computer sends the UWB physical frame can be avoided. This improves communication efficiency of the computer and improves accuracy of data exchange between computers.

According to a fourth aspect, this application provides a chip or a chip system, including a processing circuit and an interface circuit. The interface circuit is configured to receive a code instruction and transmit the code instruction to the processing circuit. The processing circuit is configured to run the code instruction to perform the method in any possible implementation of the first aspect. In this way, interference generated because an SHR part in a UWB physical frame overlaps a PHR or PSDU part in a UWB physical frame sent by another UWB device in transmission time when a specified UWB device sends the UWB physical frame can be avoided. This improves communication efficiency of the UWB device and improves accuracy of data exchange between UWB devices.

**BRIEF DESCRIPTION OF DRAWINGS**

FIG. 1A is a schematic diagram of an architecture of a communication system 10 according to an embodiment of this application;
FIG. 1B to FIG. 1F are schematic diagrams of a frame structure of a UWB physical frame according to an embodiment of this application;
FIG. 1G to FIG. 1I are schematic diagrams of a UWB device synchronization process according to an embodiment of this application;
FIG. 2 is a specific flowchart of a UWB communication method according to an embodiment of this application;
FIG. 3A to FIG. 3D are schematic diagrams of a frame structure of another UWB physical frame according to an embodiment of this application;
FIG. 3E is a schematic diagram of a time domain resource ratio of a communication frame to a positioning frame according to an embodiment of this application;
FIG. 3F to FIG. 3I are schematic diagrams of a frame structure of another UWB physical frame according to an embodiment of this application;

FIG. 4 is a schematic diagram of a module structure of a UWB device according to an embodiment of this application; and

FIG. 5 is a schematic diagram of a hardware structure of a UWB device according to an embodiment of this application.

## DESCRIPTION OF EMBODIMENTS

The following clearly describes the technical solutions in embodiments of this application with reference to the accompanying drawings. In the descriptions of embodiments of this application, unless otherwise specified, "/" indicates "or". For example, A/B may indicate A or B. The term "and/or" in this specification only describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and should not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

**The following first describes a communication system 10 provided in embodiments of this application.**

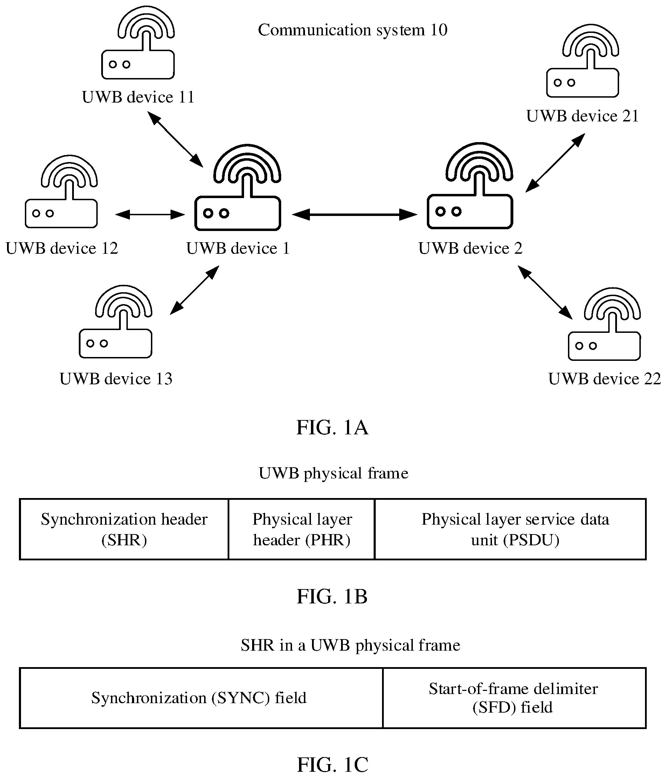

FIG. 1A is a schematic diagram of an example of an architecture of a communication system 10 according to an embodiment of this application.

As shown in FIG. 1A, the communication system 10 may include a UWB device 1, a UWB device 11, a UWB device 12, a UWB device 13, a UWB device 2, a UWB device 21, and a UWB device 22.

Devices in the communication system 10 may be grouped based on a data exchange status of communication or positioning between the devices. For example, when there is a communication requirement between the UWB device 1, the UWB device 11, the UWB device 12, and the UWB device 13, the UWB device 1, the UWB device 11, the UWB device 12, and the UWB device 13 may be a UWB communication group 1. The UWB device 1 may be a synchronization source of the UWB communication group 1. The UWB device 11, the UWB device 12, and the UWB device 13 may receive a synchronization signal (which may also be referred to as a synchronization sequence) sent by the UWB device 1, and synchronize with the UWB device 1 based on the synchronization signal. In other words, frame boundaries for transmitting UWB physical frames sent by the four devices are the same. When there is a positioning requirement between the UWB device 2, the UWB device 21, and the UWB device 22, the UWB device 2, the UWB device 21, and the UWB device 22 may be a UWB communication group 2. The UWB device 2 may be a synchronization source of the UWB communication group 2. The UWB device 21 and the UWB device 22 may receive a synchronization signal sent by the UWB device 2, and synchronize with the UWB device 2 based on the synchronization signal. In other words, frame boundaries for transmitting UWB physical frames sent by the three devices are the same. For synchronization between the UWB device 1 and the UWB device 2, in a possible implementation, the communication system 10 may preset a specified UWB device as a synchronization source between the two devices. For example, the communication system 10 may preset the UWB device 1 as the synchronization source between the two devices. In this case, the UWB device 2 may receive a synchronization signal sent by the UWB device 1, and synchronize with the UWB device 1 based on the synchronization signal. Then, the UWB device 21 and the UWB device 22 may receive a synchronization signal sent by the UWB device 2, and synchronize with the UWB device 2 based on the synchronization signal. In another possible implementation, the communication system 10 may determine a synchronization source between the two devices based on a preset rule (for example, based on a time at which a UWB physical frame is sent). For example, when a time at which the UWB device 1 sends a UWB physical frame is earlier than a time at which the UWB device 2 sends a UWB physical frame, the communication system 10 determines that the UWB device 1 is the synchronization source between the two devices. The UWB device 2 may receive a synchronization signal sent by the UWB device 1, and synchronize with the UWB device 1 based on the synchronization signal. Then, the UWB device 21 and the UWB device 22 may receive a synchronization signal sent by the UWB device 2, and synchronize with the UWB device 2 based on the synchronization signal.

Descriptions of a hardware structure and a module structure of the UWB device 2 are described in detail in subsequent embodiments. Details are not described herein again. For hardware structures and module structures of the UWB device 1, the UWB device 11, the UWB device 12, the UWB device 13, the UWB device 21, and the UWB device 22, refer to descriptions of the structure of the UWB device 2 in subsequent embodiments. Details are not described herein again. The UWB devices in the communication system 10 may exchange data based on a UWB physical frame, to implement functions such as communication, ranging and positioning, and synchronization between the devices.

It should be noted that FIG. 1A is merely used as an example to explain this application, and does not constitute a specific limitation on this application.

The following describes a structure of a UWB physical frame provided in embodiments of this application.

FIG. 1B to FIG. 1F are schematic diagrams of a frame structure of a UWB physical frame according to an embodiment of this application. The UWB physical frame may be used in the communication system 10.

As shown in FIG. 1B, the frame structure of the UWB physical frame may include an SHR, a PHR, and a PSDU.

As shown in FIG. 1C, the SHR in the UWB physical frame may be used as a device that receives the UWB physical frame, to perform channel estimation, synchronization between the UWB devices in the communication system 10, positioning and ranging between the devices, and the like. The SHR may include a synchronization (synchronization, SYNC) field and a start-of-frame delimiter (start-of-frame delimiter, SFD) field.

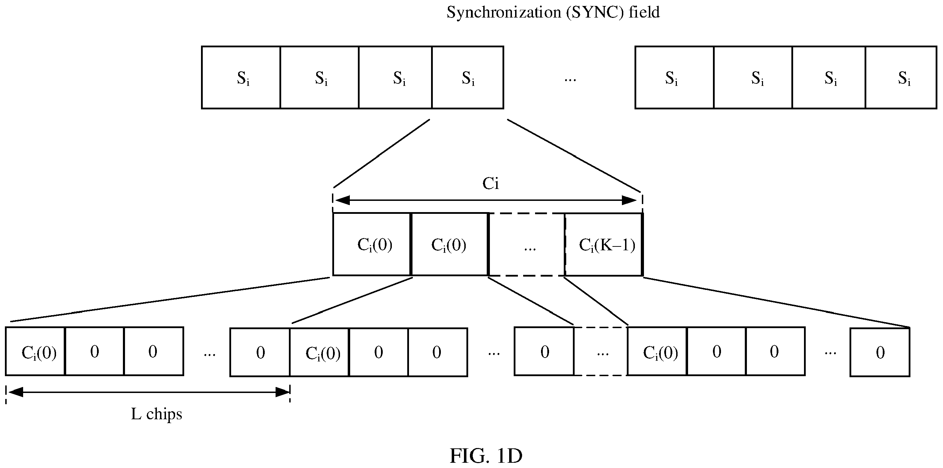

As shown in FIG. 1D, the SYNC field may be used for channel estimation, synchronization between the devices, positioning and ranging between the devices, and the like. The SYNC field may include N (for example, 64) repeated preamble symbols $S_i$. A preamble symbol $S_i$ may be generated based on a preamble code $C_i$. The preamble code $C_i$ may be a sequence whose length is K (for example, 31 or 127). The preamble code $C_i$ sequence may include values of -1, 0, and 1. For example, when a value of the length K is 31, a value of the preamble code $C_i$ sequence may be "-10000+10-10+1+1+10+1-1000+1-1+1+1+100-1+10-100". The preamble code $C_i$ sequence may be sent on a specified channel, for example, may be sent on a UWB channel whose channel number is 1. A center frequency of the UWB channel whose channel number is 1 is 3494.4 MHz, and a bandwidth is 500 MHz. For example, when a value of the length K is 127, a value of the preamble code $C_i$ sequence may be "+100+1000-10-1-100-1-1+10+10+100-1+1-1+1+10+10000+1+1-1000+100-100-1-10-1+10+10-1-10-1+1+1+10+1+1000+1-10+100-10+1+1-10+1+1+100-1+100+10+10-10+1+1-1+1-1-1+1000000+100000-1+10000-10-1000-1-1+1". The preamble code $C_i$ sequence may be sent on a specified channel. For example, the preamble code $C_i$ sequence may be sent on a UWB channel whose channel number is 4. A center frequency of the UWB channel whose channel number is 4 is 3993.6 MHz, and a bandwidth is 1331.2 MHz. It should be noted that the value of the preamble code $C_i$ sequence and the UWB channel are merely used as examples to explain embodiments of this application, and do not constitute a specific limitation on this application.

L-1 0 elements are inserted between adjacent sequence elements in the preamble code $C_i$, so that a preamble symbol $S_i$ may be generated. Therefore, a length of the preamble symbol $S_i$ is L×K, and the preamble symbol $S_i$ occupies L×K chips in total. A length of each chip is $T_c$, and the UWB device may send, based on $T_c$, a short pulse corresponding to a specified chip. For example, a value of $T_c$ is two nanoseconds.

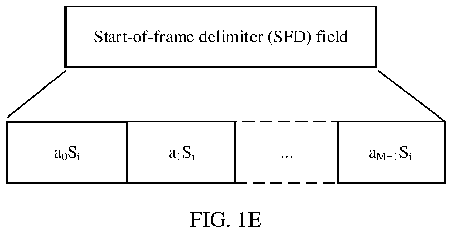

As shown in FIG. 1E, the SFD field may be used by a receiving device to determine a start position of the PHR in the UWB physical frame. For example, when detecting the SFD field, the receiving device may determine that the SFD field is followed by the PHR part in the UWB physical frame. The receiving device may decode the PHR in the UWB physical frame and the PSDU after the PHR. The SFD field may be generated based on a spreading code and the preamble symbol $S_i$. For example, when a length of the spreading code $a = [a_0, a_1, ......, a_{M-1}]$ is M, for the SFD field, refer to FIG. 1E.

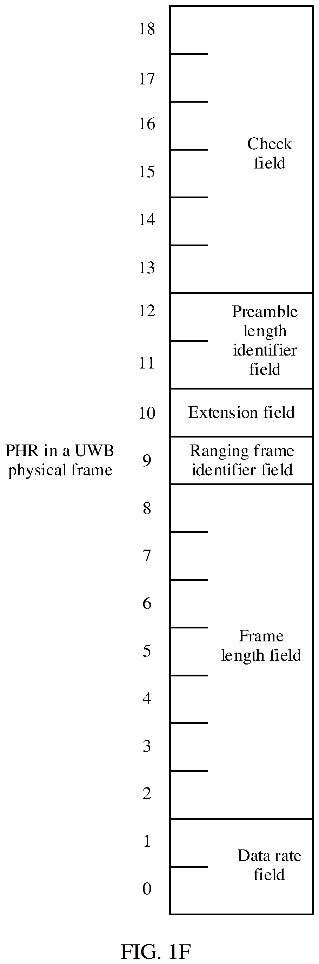

As shown in FIG. 1F, the PHR in the UWB physical frame is located after the SHR, and includes 19 pieces of bit information in total. The PHR may be used by the receiving device to correctly decode the UWB physical frame. The PHR may include a data rate field, a frame length field, a ranging frame identifier field, an extension field, a preamble length identifier field, and a check field.

The data rate field may occupy two bits and indicate a data rate of a received PSDU. Values of the data rate field and rates, of the PSDU, that correspond to the values may be shown in Table 1.

**Table 1**

| Value | Average pulse repetition frequency (PRF): 15.60 MHz or 62.40 MHz | Average pulse repetition frequency (PRF): 3.90 MHz |
|---|---|---|
| 00 | 0.11 | 0.11 |
| 01 | 0.85 | 0.85 |
| 10 | 6.81 | 1.70 |
| 11 | 27.24 | 6.81 |

It can be learned from Table 1 that, when the value of the data rate field is "00", and the average pulse repetition frequency (PRF) is 15.60 MHz or 62.40 MHz, the rate of the PSDU may be 110 kilobits per second (Kb/s); and when the average pulse repetition frequency (PRF) is 3.90 MHz, the rate of the PSDU may be 110 Kb/s. When the value of the data rate field is "01", and the average pulse repetition frequency (PRF) is 15.60 MHz or 62.40 MHz, the rate of the PSDU may be 850 Kb/s; and when the average pulse repetition frequency (PRF) is 3.90 MHz, the rate of the PSDU may be 850 Kb/s. When the value of the data rate field is "10", and the average pulse repetition frequency (PRF) is 15.60 MHz or 62.40 MHz, the rate of the PSDU may be 6810 Kb/s; and when the average pulse repetition frequency (PRF) is 3.90 MHz, the rate of the PSDU may be 1700 Kb/s. When the value of the data rate field is "11", and the average pulse repetition frequency (PRF) is 15.60 MHz or 62.40 MHz, the rate of the PSDU may be 27240 Kb/s; and when the average pulse repetition frequency (PRF) is 3.90 MHz, the rate of the PSDU may be 6810 Kb/s.

It should be noted that Table 1 is merely used to explain this application, and does not constitute a specific limitation on this application.

The frame length field may occupy seven bits and indicate a data length of the PSDU.

The ranging frame identifier field may occupy one bit. When a value of the ranging frame identifier field is "1", the ranging frame identifier field may indicate that the UWB physical frame is a physical frame used for ranging. When the value of the ranging frame identifier field is "0", the ranging frame identifier field may indicate that the UWB physical frame is not a physical frame used for ranging.

The extension field may occupy one bit, and is used for extension of the PHR part.

The preamble length identifier field may occupy two bits and indicate a length of a SYNC field in the SHR. Values of the preamble length identifier field and lengths, of the SYNC field, that correspond to the values may be shown in Table 2.

**Table 2**

| Value | Length of the SYNC field |
|-------|--------------------------|
| 00    | 16                       |
| 01    | 64                       |
| 10    | 1024                     |
| 11    | 4096                     |

It can be learned from Table 2 that, when the value of the preamble length identifier field is "00", a quantity of repetitions of a preamble symbol in the SYNC field is 16. When the value of the preamble length identifier field is "01", the quantity of repetitions of a preamble symbol in the SYNC field is 64. When the value of the preamble length identifier field is "10", the quantity of repetitions of a preamble symbol in the SYNC field is 1024. When the value of the preamble length identifier field is "11", the quantity of repetitions of a preamble symbol in the SYNC field is 4096.

The check field may occupy six bits, and is used to check a bit error transmitted by the PHR.

The PSDU part may include data that is in the UWB physical frame and that is exchanged with that in the receiving device, for example, communication data information.

The following describes a UWB communication procedure provided in embodiments of this application.

Each UWB device in the communication system 10 may perform communication based on the UWB physical frame shown in the foregoing embodiments. When a specified UWB device in the communication system 10 needs to send a UWB physical frame on a specified channel, the specified UWB device may detect whether a UWB physical frame sent by another UWB device exists on the specified channel. If the specified UWB device determines that no UWB physical frame sent by another UWB device is being transmitted on the specified channel, the specified UWB device may send a UWB physical frame on the specified channel. If the specified UWB device determines that a UWB physical frame sent by another UWB device is being transmitted on the specified channel, the specified UWB device may randomly perform avoidance for a period of time, and then detect the specified channel again until it is detected that no UWB physical frame is being transmitted on the specified channel, and the specified UWB device may send a UWB physical frame on the specified channel.

Therefore, it can be learned from the foregoing procedure that, when there are a large quantity of UWB devices in the communication system 10, another UWB device other than the specified UWB device occupies the specified channel for a long time. Consequently, the specified UWB device cannot send a UWB physical frame on the specified channel for a long time, and an average delay is also long. This causes a problem of low communication efficiency of the specified UWB device.

Based on the foregoing problem, embodiments of this application provide a UWB communication method.

The UWB communication method may be applied to the communication system 10 shown in an embodiment in FIG. 1A. Based on the UWB communication method, the UWB devices in the communication system 10 may simultaneously send UWB physical frames, and the UWB devices in the communication system 10 use a same specified frame structure (for example, a total length of a frame and a proportion of sending duration of each type of field in the frame are the same). Specifically, the communication system 10 may preset a specified UWB device as a synchronization source. Another UWB device in the communication system 10 may determine, based on a synchronization signal sent by the synchronization source, a frame boundary for performing transmitting that is the same as that of the synchronization source, and simultaneously send a UWB physical frame based on the frame boundary for performing transmitting. A UWB device in the communication system 10 may generate a UWB physical frame based on a preset specified frame structure of a specified channel, and send the UWB physical frame on the specified channel (for example, a first channel).

However, because distances between the synchronization source and devices in the communication system 10 are different, different transmission delays are generated when the synchronization source sends the synchronization signal to a plurality of UWB devices. Therefore, there is a specific time difference between frame boundaries for performing transmitting determined by the devices based on the synchronization signal sent by the synchronization source. As a result, when the UWB devices send UWB physical frames based on the frame boundaries for performing transmitting determined by the UWB devices, SHRs, PHRs, and/or PSDUs in the UWB physical frames overlap in transmission time. Then, collision and interference occur. In addition, because the SHR and the PHR have different pulse sending time intervals, sending frequencies, transmission lengths, and the like, it is difficult to eliminate interference in a code division multiplexing manner. This causes a problem of low accuracy of data exchange between the devices.

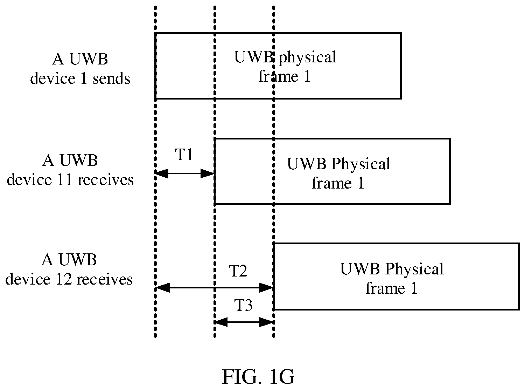

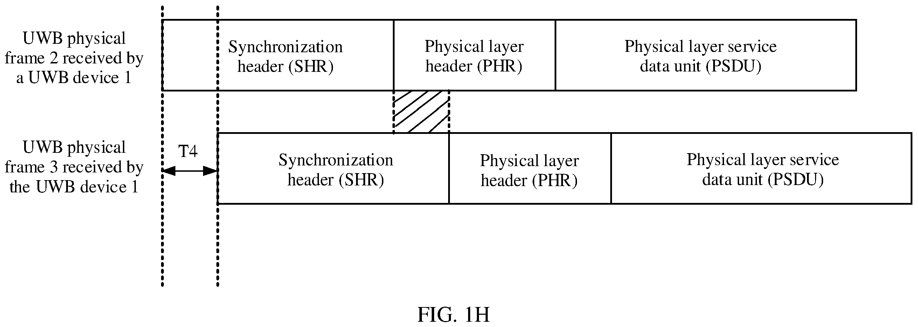

For example, as shown in FIG. 1G, the UWB device 1 in the communication system 10 is a synchronization source. The UWB device 1 sends a UWB physical frame 1 including a synchronization signal. There is a distance d1 between the UWB device 1 and the UWB device 11, and there is a distance d2 between the UWB device 1 and the UWB device 12. Therefore, when the UWB device 1 sends the UWB physical frame 1 to the UWB device 11, there is a transmission delay T1; and when the UWB device 1 sends the UWB physical frame 1 to the UWB device 12, there is a transmission delay T2. In this case, there is a time difference T1 between a frame boundary for performing transmitting determined by the UWB device 11 based on the UWB physical frame 1 and a frame boundary for performing transmitting of the UWB device 1, there is a time difference T2 between a frame boundary for performing transmitting determined by the UWB device 12 based on the UWB physical frame 1 and the frame boundary for performing transmitting of the UWB device 1, and there is a time difference T3 between the frame boundary for performing transmitting determined by the UWB device 12 and the frame boundary for performing transmitting determined by the UWB device 11. As shown in FIG. 1H, when the UWB device 11 and the UWB device 12 simultaneously send physical frames to the UWB device 1 based on the frame boundaries determined by the UWB device 11 and the UWB device 12, for example, if the UWB device 11 sends a UWB physical frame 2, and the UWB device 12 sends a UWB physical frame 3, a time difference between a time at which the physical frame 2 is received by the the UWB device 1 and a time at which the physical frame 3 is received by the UWB device 1 is T4, and a value of T4 is 2*T3. In addition, the UWB physical frame 2 sent by the UWB device 11 and the UWB physical frame 3 sent by the UWB device 12 have a same frame structure (for example, a total length of a frame and a proportion of sending duration of each type of field in the frame are the same). Therefore, a PHR part in the UWB physical frame 2 sent by the UWB device 11 overlaps an SHR part in the UWB physical frame 3 sent by the UWB device 12 in transmission time. Consequently, collision and interference generate. In addition, because the SHR and the PHR have different pulse sending time intervals, sending frequencies, transmission lengths, and the like, it is difficult to eliminate interference in a code division multiplexing manner. This causes a problem of a large synchronization/positioning error or low accuracy of data exchange between the devices.

**Therefore, this application provides a UWB communication method.**

In the UWB communication method, the UWB devices in the communication system 10 may simultaneously send UWB physical frames, and the UWB devices in the communication system 10 use a same specified frame structure (for example, a total length of a frame and a proportion of sending duration of each type of field in the frame are the same). A specified position (for example, between an SHR and a PHR, between a synchronization sequence and a ranging sequence in an SHR, or between a frame boundary for performing transmitting and a sending start moment of an SHR in a UWB physical frame) in the specified frame structure may include a first time interval. In this way, when there is a time difference between frame boundaries for performing transmitting of the UWB devices in the communication system 10, interference generated because an SHR part in a UWB physical frame overlaps a PHR or PSDU part in a UWB physical frame sent by another UWB device in transmission time when the specified UWB device in the communication system 10 sends the UWB physical frame can be avoided based on the first time interval. This improves communication efficiency of the UWB devices and improves accuracy of data exchange between the UWB devices.

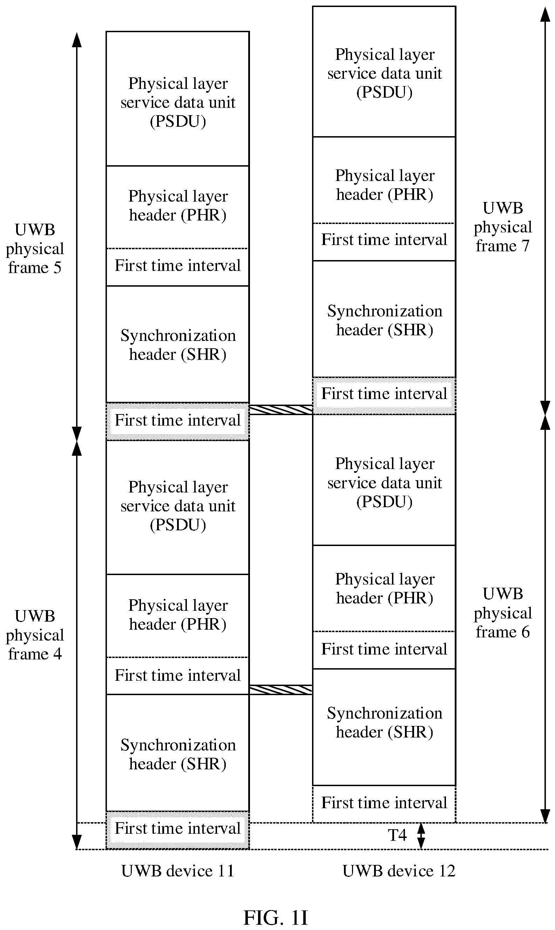

For example, as shown in FIG. 1I, first time intervals are included between SHRs and PHRs in a UWB physical frame 4 and a UWB physical frame 5 that are sent by the UWB device 11, and between frame boundaries for performing transmitting and sending start moments of the SHRs. First time intervals are included between SHRs and PHRs in a UWB physical frame 6 and a UWB physical frame 7 that are sent by the UWB device 12, and between frame boundaries for performing transmitting and sending start moments of the SHRs. When the UWB device 11 sends the UWB physical frame 4 and the UWB physical frame 5, and the UWB device 12 sends the UWB physical frame 6 and the UWB physical frame 7, the first time interval between an SHR and a PHR may enable the PHR in the UWB physical frame 4 not to overlap an SHR in the UWB physical frame 6 in transmission time, and the first time interval between a frame boundary for performing transmitting and a sending start moment of an SHR may enable the SHR in the UWB physical frame 5 not to overlap a PSDU in the UWB physical frame 6 in transmission time. Therefore, collision and interference are avoided. This improves communication efficiency of the UWB devices and improves accuracy of data exchange between the UWB devices.

**The following describes a specific procedure of a UWB communication method provided in embodi-**

**ments of this application.**

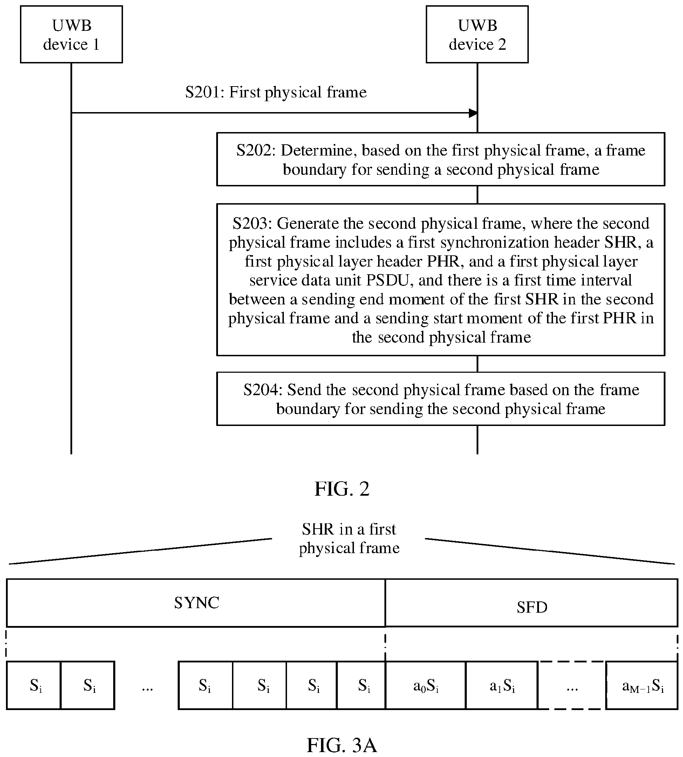

FIG. 2 is a specific flowchart of an example of a UWB communication method according to an embodiment of this application.

As shown in FIG. 2, the UWB communication method includes but is not limited to the following steps.

S201: A UWB device 2 receives a first physical frame sent by a UWB device 1.

Specifically, the first physical frame includes an SHR, a PHR, and a PSDU. For descriptions of the foregoing parts, refer to descriptions in the embodiment shown in FIG. 1B to FIG. 1F. Details are not described herein again. The SHR in the first physical frame includes a synchronization sequence. The synchronization sequence may be used by a receiving device to determine a frame boundary for performing transmitting, so that the receiving device can send a UWB physical frame simultaneously with the UWB device 1.

In a possible implementation, the PHR or the PSDU in the first physical frame may include configuration information indicating a time domain resource used for communication and a time domain resource used for positioning. After the receiving device determines, based on the synchronization sequence in the SHR in the first physical frame, the frame boundary for performing transmitting, the receiving device may determine, based on the configuration information that indicates the time domain resource used for communication and the time domain resource used for positioning and that is included in the PSDU in the first physical frame, a sending moment at which the receiving device may send a UWB physical frame used for communication and a sending moment at which the receiving device may send a UWB physical frame used for positioning.

S202: The UWB device 2 determines, based on the first physical frame, a frame boundary for transmitting a second physical frame.

Specifically, after the UWB device 2 receives the first physical frame, the UWB device 2 may perform related calculation on the received first physical frame and a locally stored synchronization sequence. When a related peak value is found, the UWB device 2 may determine a frame boundary of the first physical frame. The UWB device 2 may use the frame boundary of the first physical frame as the frame boundary for transmitting the second physical frame.

S203: The UWB device 2 generates the second physical frame, where the second physical frame includes a first synchronization header SHR, a first physical layer header PHR, and a first physical layer service data unit PSDU, and there is a first time interval between a sending end moment of the first SHR in the second physical frame and a sending start moment of the first PHR in the second physical frame.

Specifically, in some embodiments, the UWB device 2 may send the second physical frame on a first channel. In this case, the UWB device 2 may generate the second physical frame based on a preset frame structure of the first channel. A frame structure of the second physical frame sent by the UWB device 2 is the same as a frame structure of the first physical frame sent by the UWB device 1 (for example, a total length of a frame and a proportion of sending duration of each type of field in the frame are the same). The UWB device 2 may receive the first physical frame on the first channel.

In some other embodiments, the UWB device 2 may generate the second physical frame based on the first physical frame. Specifically, in a possible implementation, the SHR in the first physical frame includes an SFD field. The SFD field is generated based on a preamble symbol and a first spreading code. The first spreading code corresponds to a first frame structure (for example, a total length of a frame and a proportion of sending duration of each type of field in the frame). The first frame structure is the frame structure of the first physical frame. The UWB device 2 may determine the first frame structure based on the first spreading code, and generate the second physical frame based on the first frame structure. Different spreading codes may correspond to different frame structures.

For example, the UWB device 2 may store mapping relationships between different spreading codes and different frame structures, as shown in Table 3.

**Table 3**

| Spreading code | Frame structure |
| --- | --- |
| $a = [a_0, a_1, \ldots \ldots, a_{M-1}]$ | First frame structure |
| $b = [b_0, b_1, \ldots \ldots, b_{M-1}]$ | Second frame structure |
| $c = [c_0, c_1, \ldots \ldots, c_{M-1}]$ | Third frame structure |
| ... | ... |

It can be learned from Table 3 that, when the spreading code is $a = [a_0, a_1, \ldots \ldots, a_{M-1}]$, the spreading code corresponds to the first frame structure;

when the spreading code is $b = [b_0, b_1, ... ..., b_{M-1}]$, the spreading code corresponds to the second frame structure; and when the spreading code is $c = [c_0, c_1, ......, c_{M-1}]$, the spreading code corresponds to the third frame structure.

It should be noted that Table 3 is merely used as an example to explain this application, and does not constitute a limitation on this application.

As shown in FIG. 3A, the SHR in the first physical frame includes a SYNC field and an SFD field. The SYNC field includes a plurality of preamble symbols $S_i$. The SFD field is a field including a preamble symbol and a spreading code, for example, $a_0S_i$, $a_1S_i$, ..., and $a_{M-1}S_i$. The UWB device 2 may calculate a spreading code $a = [a_0, a_1, ... ..., a_{M-1}]$ (which may also be referred to as the first spreading code) based on the SFD field and the preamble symbols in the SYNC field. Based on Table 3, it can be learned that the spreading code corresponds to the first frame structure, namely, the frame structure of the first physical frame. The UWB device may generate the second physical frame based on the first frame structure. A frame structure of the second physical frame is same as the frame structure of the first physical frame (for example, a total length of a frame and a proportion of sending duration of each type of field in the frame are the same).

In another possible implementation, the UWB device 2 may determine, based on a frame structure indication field that is in the PHR or the PSDU in the first physical frame and that corresponds to a first frame structure, the first frame structure. The UWB device 2 may generate the second physical frame based on the determined first frame structure.

For example, the UWB device 2 stores mapping relationships between different frame structure indication fields and frame structures, as shown in Table 4.

**Table 4**

| Frame structure indication field | Frame structure |
|---|---|
| 0X01 | First frame structure |
| 0X02 | Second frame structure |
| 0X03 | Third frame structure |
| ... | ... |

It can be learned from Table 4 that, when a value of the frame structure indication field is "0X01", the frame structure indication field corresponds to the first frame structure. When the value of the frame structure indication field is "0X02", the frame structure indication field corresponds to the second frame structure. When the value of the frame structure indication field is "0X03", the frame structure indication field corresponds to the third frame structure.

It should be noted that Table. 4 is merely used as an example to explain this application, and does not constitute a specific limitation on this application. During specific implementation, the frame structure indication field may alternatively be another value. This is not limited in this application.

When the UWB device 2 determines, through parsing of the PHR or the PSDU in the first physical frame, that the value of the frame structure indication field is "0X01", the UWB device 2 may determine that the frame structure of the first physical frame is the first frame structure, and the UWB device 2 may generate the second physical frame based on the first frame structure.

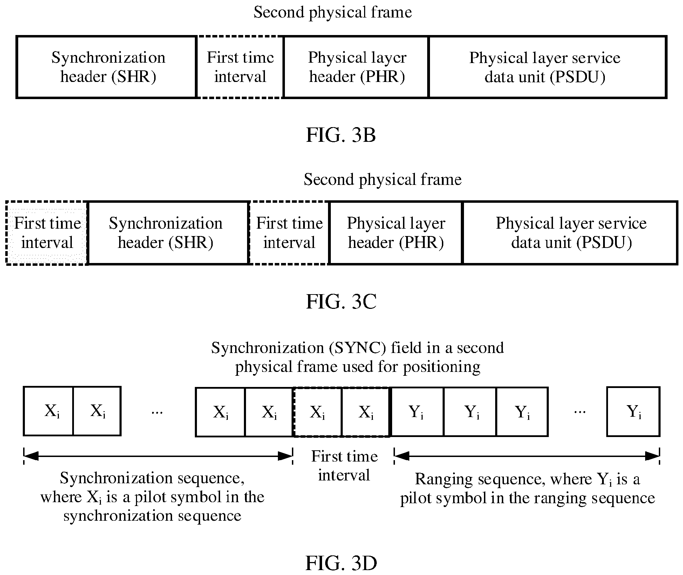

FIG. 3B is a schematic diagram of an example of a frame structure of a second physical frame. The second physical frame may include the first SHR, the first PHR, and the first PSDU. There is a first time interval between the sending end moment of the first SHR and the sending start moment of the first PHR. For descriptions of the first SHR, the first PHR, and the first PSDU in the second physical frame, refer to descriptions of the SHR, the PHR, and the PSDU in the UWB physical frame in embodiments shown in FIG. 1B to FIG. 1F. Details are not described herein again. In a possible implementation, the first time interval between the sending end moment of the first SHR and the sending start moment of the first PHR does not include any data field, or may include other communication data (for example, Bluetooth data) other than UWB physical frame data. In other words, when the first time interval does not include any data field, after sending of the first SHR is completed, the UWB device 2 may wait for duration of the first time interval, and then start to send the first PHR. In this period, no data field is sent. When the first time interval includes other communication data other than the UWB physical frame data, for example, Bluetooth data, after sending of the first SHR is completed, the UWB device 2 may wait for duration of the first time interval, and then start to send the first PHR. In this period, a communication system based on Bluetooth communication may send the Bluetooth data.

The duration of the first time interval may be duration preset by the communication system 10, or may be duration determined by the UWB device 2 based on time interval indication information in the first physical frame. The duration of the first time interval is less than a first threshold. The first threshold may be determined based on maximum coverage of the communication system 10. For example, the first threshold may be determined based on Algorithm 1 including a parameter of the maximum coverage of the communication system 10. Algorithm 1 may be specifically:

$$T_{max} = 2d_{max} \div c$$

$T_{max}$ is a first threshold. $d_{max}$ is the maximum coverage of the communication system 10. c is speed of light.

It should be noted that Algorithm 1 is merely used as an example to explain this application, and does not constitute a specific limitation on this application.

Optionally, as shown in FIG. 3C, there may also be the first time interval between the frame boundary for transmitting the second physical frame and a sending start moment of the second physical frame. In this way, collision and interference generated because an SHR part in the second physical frame overlaps a PSDU in a UWB physical frame sent by another UWB device in transmission time can be avoided. For a specific example, refer to descriptions in FIG. 1I. Details are not described herein again. The first time interval may not include any data field, or may include other communication data (for example, Bluetooth data) other than UWB physical frame data. In other words, when the first time interval does not include any data field, after determining the frame boundary for performing transmitting, the UWB device 2 may wait for the duration of the first time interval, and then start to send the first SHR. In this period, no data field is sent. When the first time interval includes other communication data other than the UWB physical frame data, for example, Bluetooth data, after determining the frame boundary for performing transmitting, the UWB device 2 may wait for the duration of the first time interval, and then start to send the first SHR. In this period, a communication system based on Bluetooth communication may send the Bluetooth data.

Optionally, when the UWB device 2 and a receiving device that receives the second physical frame may perform ranging and positioning based on the second physical frame, a value of a ranging frame identifier field in the first PHR may be "1", indicating that the second physical frame is used for ranging and positioning. A SYNC field in the first SHR may include a synchronization sequence and a ranging sequence. The synchronization sequence may be used to synchronize the receiving device that receives the second physical frame with the UWB device 2. The ranging sequence may be used by the UWB device 2 and the receiving device to perform ranging and positioning. There is a first time interval between a sending end moment of the synchronization sequence and a sending start moment of the ranging sequence, to avoid interference between the synchronization sequence and the ranging sequence. Preamble symbols in the synchronization sequence and the ranging sequence may be different, lengths of the preamble symbols in the synchronization sequence and the ranging sequence may be different, and quantities of repetitions of the preamble symbols in the synchronization sequence and the ranging sequence may also be different. The first time interval between the sending end moment of the synchronization sequence and the sending start moment of the ranging sequence may include a first padding field. The first padding field may include a repeated preamble symbol in the synchronization sequence, or may include a repeated preamble symbol in the ranging sequence, or may not include any data field. When the first time interval includes the first padding field, and the first padding field may include the repeated preamble symbol in the synchronization sequence, or may include the repeated preamble symbol in the ranging sequence, after sending the synchronization sequence, the UWB device 2 may send some of repeated preamble symbols in the synchronization sequence or some of repeated preamble symbols in the ranging sequence. Sending duration is the duration of the first time interval. Then, the UWB device 2 sends the ranging sequence. After being synchronized with the UWB device 2, the receiving device may determine a position of the first padding field in the second physical frame. When receiving the first padding field, the receiving device may not need to decode the first padding field. When the first time interval does not include any data field, after sending the synchronization sequence, the UWB device 2 may wait for the duration of the first time interval, and then start to send the ranging sequence.

For example, as shown in FIG. 3D, the SYNC field in the second physical frame includes the synchronization sequence, the first time interval, and the ranging sequence. There is a first time interval between the sending end moment of the synchronization sequence and the sending start moment of the ranging sequence. The synchronization sequence includes a plurality of repeated preamble symbols $X_i$. The first time interval includes the first padding field. The first padding field may be some of the repeated preamble symbols $X_i$ in the synchronization sequence. The ranging sequence includes a plurality of repeated preamble symbols $Y_i$. The preamble symbol $X_i$ and the preamble symbol $Y_i$ may be different, and quantities of repetitions of the preamble symbol $X_i$ and the preamble symbol $Y_i$ may also be different.

Optionally, when the UWB device 2 and the receiving device that receives the second physical frame do not need to perform positioning based on the second physical frame, the value of the ranging frame identifier field in the first PHR may be "0", and the SYNC field in the first SHR may not include the ranging sequence. In this way, power consumption of sending the second physical frame by the UWB device 2 can be reduced, and efficiency of sending the second physical frame by the UWB device 2 can be improved.

Optionally, sending duration of the first PSDU may not be greater than first preset duration. The first preset duration may be determined based on a maximum quantity of bytes (for example, 127 bytes) of the first PSDU and a bit rate.

Optionally, in some application scenarios, the second physical frame may be classified into different frame types, for example, a synchronization frame, a communication frame, a positioning frame, and/or an acknowledgment ACK frame. In the application scenario, the first PHR may include a first sub-PHR and a second sub-PHR. The first sub-PHR has a fixed quantity of bits (for example, 19 bits). The first PHR may include indication information of a frame type and/or all or some of bits in address information of the receiving device (which may also be referred to as destination address information). When the receiving device receives the second physical frame, the receiving device may compare whether bit information of a destination address of the second physical frame is consistent with bit information of an address of the receiving device. If yes, the first PSDU is decoded, and if not, the first PSDU does not need to be decoded. In a possible implementation, all or some of the bits in the destination address information may alternatively be in a second sub-PHR. This is not limited in this application. In this way, power consumption of decoding the first PSDU by the receiving device can be reduced.

In the application scenario, the synchronization frame may be used by a receiving device that receives the synchronization frame to determine a frame boundary for performing transmitting. The communication frame may be used by the UWB device 2 to exchange data with the receiving device. The positioning frame may be used by the UWB device 2 and the receiving device to perform positioning and ranging based on the positioning frame. The acknowledgment (acknowledgment, ACK) frame may be used by the UWB device 2 to notify the receiving device that the UWB physical frame sent by the receiving device has been received.

When the second physical frame is the synchronization frame, the second physical frame may be used by the receiving device to determine, based on the second physical frame, the frame boundary for performing transmitting. In this case, the second sub-PHR includes a system frame number of a frame in which the second physical frame is located, a sending periodicity of the synchronization frame, and/or resource configuration information. The system frame number may indicate a frame number of a current frame to the receiving device. The resource configuration information indicates a frame number that correponds to a recource used to send a communication frame and a frame number that correponds to a recource used to send a positioning frame. The receiving device may determine, based on the second physical frame, the frame boundary for performing transmitting, and determine, based on the frame number of the current frame and the resource configuration information, a sending time of a frame used for communication and a sending time of a frame used for positioning. For example, when a value range of the system frame number of the communication system 10 is 0 to 1023, a frame number indicated by the second physical frame (namely, the synchronization frame) may be 10. This means that a frame number of a frame on which the second physical frame is sent is 10. The resource configuration information in the second sub-PHR indicates that the positioning frame may be sent on a frame whose frame number is an even number, and the communication frame may be sent on a frame whose frame number is an odd number. In this case, a device that needs to send the positioning frame may send the positioning frame on a frame whose frame number is 12, 14, 16, or the like, and a device that needs to send the communication frame may send the communication frame on a frame whose frame number is 11, 13, 15, or the like.

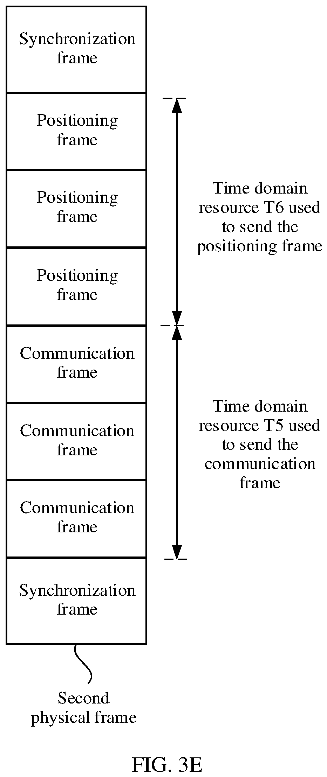

In a possible implementation, when the second physical frame is the synchronization frame, the second sub-PHR may include a sending periodicity of the synchronization frame and/or resource configuration information. The resource configuration information may include ratio information indicating a time domain resource used for communication and a time domain resource used for positioning between the synchronization frame and a next synchronization frame. The receiving device may determine, based on the second physical frame, the frame boundary for performing transmitting, and determine, based on the resource configuration information and the sending periodicity of the synchronization frame, a sending time of a frame used for communication and a sending time of a frame used for positioning. For example, as shown in FIG. 3E, when the frame type of the second physical frame is the synchronization frame, the second sub-PHR in the second physical frame indicates that a time domain resource ratio of the frame that may be used for communication to the frame that may be used for positioning between the synchronization frame and the next synchronization frame is T5:T6. The receiving device may determine, based on the ratio information of time domain resources and the sending periodicity of the synchronization frame in the second sub-PHR, that is, a time interval between the synchronization frame and the next synchronization frame, the sending time for sending the communication frame and the sending time for sending the positioning frame.

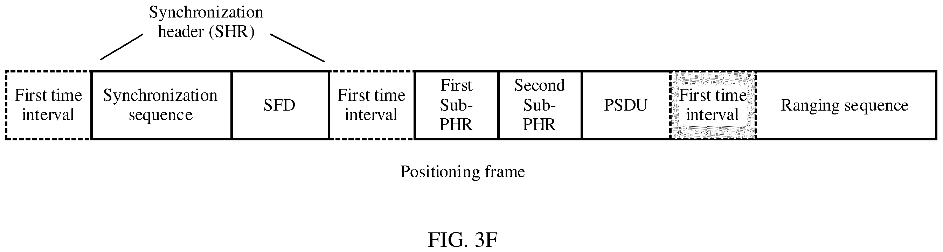

When the second physical frame is the positioning frame, the second physical frame may be used by the UWB device 2 and the receiving device to perform positioning and ranging based on the positioning frame. In the second physical frame, the second sub-PHR includes a sending periodicity of a first service, a bit rate, and/or indication information of a size of data in the first PSDU. Information about the second sub-PHR may be used by the receiving device to decode the first PSDU. In addition, the second physical frame may include a ranging sequence. For example, as shown in FIG. 3F, the ranging sequence may be located after the first PSDU, and there is a first time interval between a sending end moment of the first PSDU and a sending start moment of the ranging sequence. In this case, the SYNC field includes only the synchronization sequence and the SFD field. The first time interval may not include any data field, or may include a second padding field. The second padding field may include a repeated preamble symbol in the ranging sequence. The receiving device may pre-determine a position of the second padding field in the second physical frame. The receiving device may not need to receive the second padding field. When the first time interval does not include any data field, after sending the first PSDU, the UWB device 2 may wait for the duration of the first time interval, and then start to send the ranging sequence. In this period, no data field is sent. When the first time interval includes the second padding field, and the second padding field is a repeated preamble symbol in the ranging sequence, after sending the first PSDU, the UWB device 2 may send the second padding field, that is, some of repeated preamble symbols in the ranging sequence. Sending duration is the duration of the first time interval. Then, the UWB device 2 sends the ranging sequence. The receiving device may pre-determine the position of the second padding field in the second physical frame, and the receiving device may not need to receive the second padding field.

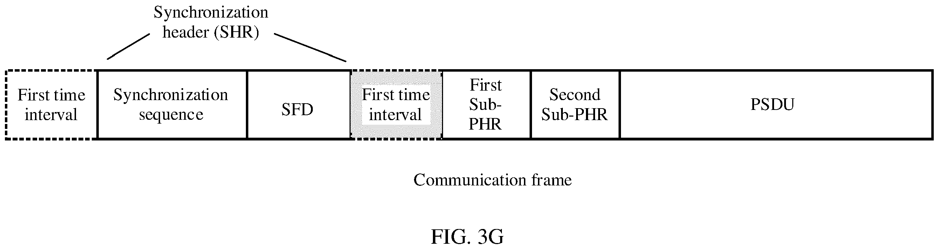

When the second physical frame is the communication frame, the second physical frame may be used by the UWB device 2 to exchange data with the receiving device. As shown in FIG. 3G, the second physical frame may include a synchronization sequence. In this way, power consumption of sending the second physical frame by the UWB device 2 can be reduced, and sending efficiency of the second physical frame can be improved. The second sub-PHR in the second physical frame includes a sending periodicity of a first service, a bit rate, and/or indication information of a size of data in the first PSDU. Information about the second sub-PHR may be used by the receiving device to decode the first PSDU.

When the second physical frame is the communication frame or the positioning frame, the first service is a service used for communication between the UWB device 2 and the receiving device or a service used for positioning between the UWB device 2 and the receiving device. The periodicity of the first service means a time at which the UWB device 2 and the receiving device receive and send the communication frame during a communication service, or a time at which the UWB device 2 and the receiving device receive and send the positioning frame during a positioning service. The second physical frame is a frame in the first service.

When the second physical frame is the acknowledgment ACK frame, the second physical frame may be used by the UWB device 2 to notify the receiving device whether the UWB physical frame sent by the receiving device is correctly received. For example, the UWB device 2 may send, to the UWB device 1, the second physical frame whose frame type is the acknowledgment ACK frame, to notify the UWB device 1 that the UWB device 2 has received the first physical frame. The second physical frame does not include the second sub-PHR, or the second sub-PHR includes indication information of a size of data in the first PSDU and/or a bit rate.

S204: The UWB device 2 sends the second physical frame based on the frame boundary for transmitting the second physical frame.

Specifically, after the UWB device 2 generates the second physical frame, and determines, based on the first physical frame, the frame boundary for performing transmitting, when the first time interval is not included between the frame boundary for transmitting the second physical frame and the sending start moment of the second physical frame, the UWB device 2 may send the first SHR at the frame boundary for performing transmitting. When there may also be the first time interval between the frame boundary for transmitting the second physical frame and the sending start moment of the second physical frame, after determining the frame boundary for performing transmitting, the UWB device 2 may wait for the duration of the first time interval, and then start to send the first SHR. For related descriptions, refer to descriptions in S203. Details are not described herein again.

It should be noted that a sequence of the foregoing steps is merely used as an example to explain this application, and does not constitute a specific limitation on this application. For example, S203 may be performed before S202, or S203 and S202 may be simultaneously performed. This is not limited in this application.

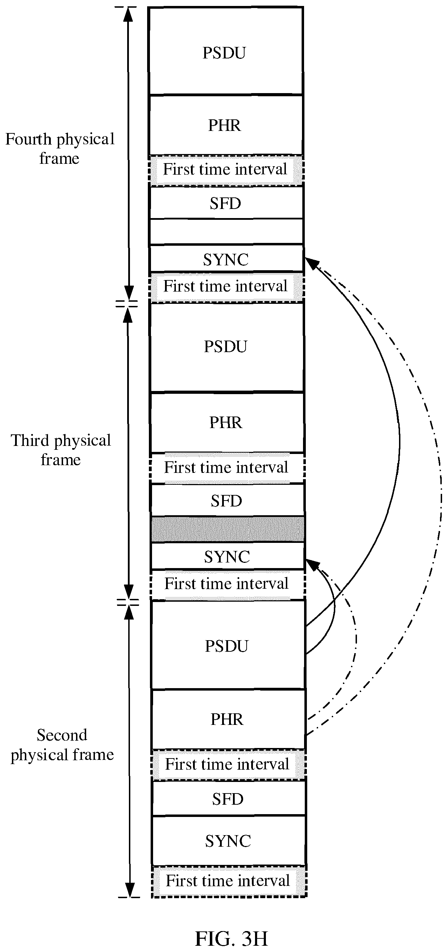

In some application scenarios, after sending the second physical frame, the UWB device 2 further sends a third physical frame and a fourth physical frame. Because a channel change or a synchronization deviation is small within a specified time, the third physical frame and the fourth physical frame do not need to include a complete SHR. Therefore, as shown in FIG. 3H, in a possible implementation, the first PHR or the first PSDU in the second physical frame may include first preamble symbol indication information. The first preamble symbol indication information may indicate a quantity of repetitions of a preamble symbol in a SYNC field in a third physical frame and a quantity of repetitions of a preamble symbol in a SYNC field in a fourth physical frame. Frame structures of the second physical frame, the third physical frame, and the fourth physical frame are the same (for example, a total length of a frame and a proportion of sending duration of each type of field in the frame are the same), and are all the first frame structure. The third physical frame is sent after the second physical frame, and the fourth physical frame is sent after the third physical frame.

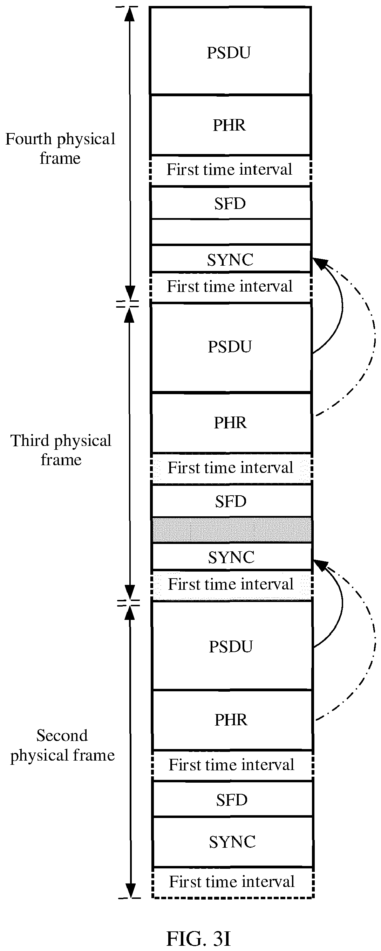

In another possible implementation, as shown in FIG. 3I, the first PHR or the first PSDU in the second physical frame includes second preamble symbol indication information. The second preamble symbol indication information includes a quantity of repetitions of a preamble symbol in a SYNC field in a third physical frame. The second PHR or the second PSDU in the third physical frame includes third preamble symbol indication information. The third preamble symbol indication information includes a quantity of repetitions of a preamble symbol in a SYNC field in a fourth physical frame. Frame structures of the second physical frame, the third physical frame, and the fourth physical frame are the same (for example, a total length of a frame and a proportion of sending duration of each type of field in the frame are the same), and are all the first frame structure. The third physical frame is sent after the second physical frame, and the fourth physical frame is sent after the third physical frame.

**The following describes a module structure of a UWB device provided in embodiments of this application.**

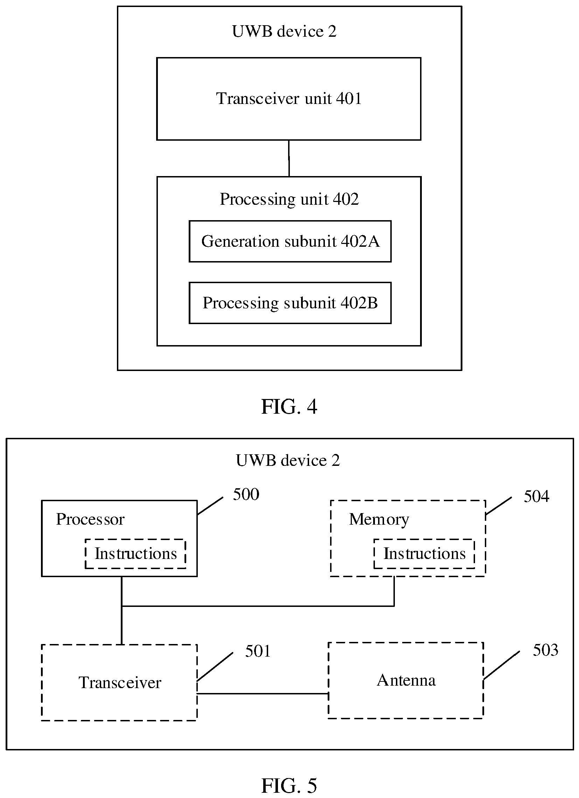

Refer to FIG. 4. The UWB device 2 in the communication system 10 is used as an example. FIG. 4 is a schematic diagram of an example of a module structure of the UWB device.

As shown in FIG. 4, the UWB device 2 may be a communication apparatus using a UWB wireless communication technology. The UWB device 2 may include a transceiver unit 401 and a processing unit 402. The processing unit 402 may include a generation subunit 402A and a processing subunit 402B.

It can be understood that, a structure illustrated in embodiments of this application does not constitute a specific limitation on the UWB device. In other embodiments of this application, the UWB device 2 may further include more or fewer components than those shown in the figure, or some components may be combined, or some components may be split, or there may be a different component layout. The components shown in the figure may be implemented by hardware, software, or a combination of software and hardware.

The transceiver unit 401 may be configured to receive a UWB physical frame sent by another UWB device to the UWB device 2, for example, the first physical frame shown in an embodiment in FIG. 2. The transceiver unit 401 may further send a UWB physical frame. For example, the UWB device 2 may send a second physical frame, a third physical frame, and/or a fourth physical frame by using the transceiver unit 401.

The processing subunit 402B may be configured to parse the received UWB physical frame. For example, the UWB device 2 may parse out, by using the processing subunit 402B, a first spreading code in the first physical frame, or a frame structure indication field that is included in a first PHR or a first PSDU in the first physical frame and that corresponds to a first frame structure, to determine the first frame structure. For a specific implementation, refer to descriptions of the embodiment shown in FIG. 2. Details are not described herein again.

The generation subunit 402A may be configured to generate a UWB physical frame. For example, the UWB device 2 may generate, by using the generation subunit 402A, the second physical frame based on the first frame structure determined by the processing subunit 402B. For a specific implementation, refer to descriptions of the embodiment shown in FIG. 2. Details are not described herein again.

It should be noted that FIG. 4 is merely used as an example to explain this application, and should not constitute a specific limitation on this application.

The following describes a hardware structure of a UWB device provided in embodiments of this application.

Refer to FIG. 5. The UWB device 2 in the communication system 10 is used as an example. FIG. 5 is a schematic diagram of an example of a hardware structure of the UWB device.

As shown in FIG. 5, the UWB device 2 may include a processor 500 and a transceiver 501 internally connected to the processor. The processor 500 may be a general-purpose processor, a dedicated processor, or the like. For example, the processor 500 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a computer program, and process data of the computer program. The transceiver 501 may be referred to as a transceiver unit, a transceiver machine, a transceiver circuit, or the like, and is configured to implement a receiving/sending function. The transceiver 501 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the UWB device 2 may further include an antenna 503 and/or a radio frequency unit (not shown in FIG. 5). The antenna 503 and/or the radio frequency unit may be located inside the UWB device 2, or may be separated from the UWB device 2. In other words, the antenna 503 and/or the radio frequency unit may be deployed remotely or deployed in a distributed manner.

Optionally, the UWB device 2 may include one or more memories 504. The memory 504 may store instructions. The instructions may be a computer program. The computer program may be run on the UWB device 2, to enable the UWB device 2 to perform the methods described in the foregoing method embodiments. Optionally, the memory 504 may further store data. The UWB device 2 and the memory 504 may be separately disposed, or may be integrated together.

Optionally, the processor 500 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

Optionally, the processor 500 may store instructions. The instructions may be a computer program. The computer program is run on the processor 500, to enable the UWB device 2 to perform the methods described in the foregoing method embodiments. The computer program may be fixed in the processor 500. In this case, the processor 500 may be implemented by hardware.

The processor 500, the transceiver 501, and the memory 504 may be connected to each other through a communication bus.

In a possible implementation, the UWB device 2 may include a circuit. The circuit may implement the sending function, the receiving function, or the communication function in the foregoing method embodiments. The processor and the transceiver described in this application may be implemented on an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal-oxide-semiconductor (complementary metal-oxide-semiconductor, CMOS), an N-type metal-oxide-semiconductor (N-type metal-oxide-semiconductor, NMOS), a P-type metal-oxide-semiconductor (P-type metal-oxide-semiconductor, PMOS), a bipolar junction transistor (bipolar junction transistor, BJT), a bipolar CMOS (BiCMOS), silicon germanium (SiGe), and gallium arsenide (GaAs).

A scope of the UWB device described in this application is not limited thereto, and the structure of the UWB device 2 may not be limited by that in FIG. 5. The UWB device 2 may be an independent device or may be a part of a large device, for example, a set of one or more ICs. Optionally, the IC set may also include a storage component configured to store data and a computer program, a module that may be embedded in another device, a receiver machine, a terminal, an intelligent terminal, a cellular phone, a wireless device, a handheld device, a mobile unit, a vehicle-mounted device, a network device, a cloud device, an artificial intelligence device, or the like.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement embodiments, all or some of the foregoing embodiments may be implemented in a form of a computer program product. The computer program product includes one or more computer instructions. When the computer program instructions are loaded and executed on a computer, all or some of the procedures or functions in embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in embodiments may be implemented by a computer program instructing related hardware. The program may be stored in a computer-readable storage medium. When the program is executed, the procedures in the method embodiments may be included. The foregoing storage medium includes any medium that can store program code, such as a ROM, a random access memory RAM, a magnetic disk, or an optical disc.

## Claims

1. A UWB communication method, comprising:

   receiving a first physical frame;
   determining, based on the first physical frame, a frame boundary for transmitting a second physical frame, wherein the second physical frame comprises a first synchronization header, SHR, a first physical layer header PHR, and a first physical layer service data unit PSDU; and
   sending the second physical frame based on the frame boundary for transmitting the second physical frame, wherein there is a first time interval between a sending end moment of the first SHR and a sending start moment of the first PHR.

2. The method according to claim 1, wherein there is a first time interval between the frame boundary for transmitting the second physical frame and a sending start moment of the first SHR in the second physical frame.

3.  The method according to claim 1, wherein a synchronization SYNC field in the first SHR comprises a synchronization sequence and a ranging sequence, the synchronization sequence is different from the ranging sequence, and there is a first time interval between a sending end moment of the synchronization sequence and a sending start moment of the ranging sequence.

4.  The method according to claim 1, wherein duration of the first time interval is preset duration, or duration determined based on time interval indication information in the first physical frame.

5.  The method according to claim 1, wherein the second physical frame is generated based on a preset frame structure of a first channel; and
the sending the second physical frame based on the frame boundary for transmitting the second physical frame specifically comprises:

    generating the second physical frame based on the preset frame structure of the first channel; and
    sending the second physical frame on the first channel based on the frame boundary for transmitting the second physical frame.

6.  The method according to claim 1, wherein the second physical frame is determined based on the first physical frame, a synchronization header SHR in the first physical frame comprises a start-of-frame delimiter SFD field, and the SFD field is generated based on a preamble symbol and a first spreading code; and
the sending the second physical frame based on the frame boundary for transmitting the second physical frame specifically comprises:

    determining a first frame structure based on a mapping relationship between the first spreading code and a frame structure, wherein different spreading codes correspond to different frame structures;
    generating the second physical frame based on the first frame structure; and
    sending the second physical frame based on the frame boundary for transmitting the second physical frame.

7.  The method according to claim 1, wherein the second physical frame is determined based on the first physical frame, a physical layer header PHR or a physical layer service data unit PSDU in the first physical frame comprises a frame structure indication field, and the frame structure indication field indicates a first frame structure; and
the sending the second physical frame based on the frame boundary for transmitting the second physical frame specifically comprises:

    generating the second physical frame based on the first frame structure indicated by the frame structure indication field; and
    sending the second physical frame based on the frame boundary for transmitting the second physical frame.

8.  The method according to claim 1, wherein the first PHR in the second physical frame comprises a first sub-PHR and a second sub-PHR, the first sub-PHR has a fixed quantity of bits, the first sub-PHR comprises indication information of a frame type and/or all or some of bits in a destination address at which the second physical frame is received, and the frame type comprises a synchronization frame, a communication frame, a positioning frame, and/or an ACK frame.

9.  The method according to claim 8, wherein when the frame type of the second physical frame is the positioning frame, the second physical frame comprises a ranging sequence, the second sub-PHR in the second physical frame comprises a sending periodicity of a first service, a bit rate, and/or indication information of a size of data in the first PSDU, and the second physical frame is a frame in the first service; and
the ranging sequence is located after the first PSDU, and there is a first time interval between a sending end moment of the first PSDU and a sending start moment of the ranging sequence.

10. The method according to claim 8, wherein when the frame type of the second physical frame is the communication frame, the second physical frame comprises a synchronization sequence, the second sub-PHR in the second physical frame comprises a sending periodicity of a first service, a bit rate, and/or indication information of a size of data in the first PSDU, and the second physical frame is a frame in the first service.

11. The method according to claim 8, wherein when the frame type of the second physical frame is the ACK frame, the second physical frame does not comprise the second sub-PHR, or the second sub-PHR in the second physical frame comprises indication information of a size of data in the first PSDU and/or a bit rate.

12. The method according to claim 8, wherein when the frame type of the second physical frame is the synchronization frame, a frame structure of the second physical frame is the same as a frame structure of the first physical frame, the second sub-PHR comprises a system frame number, a sending periodicity of the synchronization frame, and/or resource configuration information, and the resource configuration information indicates a time domain resource used for communication and a time domain resource used for positioning.

13. The method according to claim 8, wherein when the frame type of the second physical frame is the synchronization frame, a frame structure of the second physical frame is the same as a frame structure of the first physical frame, the second sub-PHR comprises a system frame number and/or a sending periodicity of the synchronization frame, the first PSDU comprises resource configuration information, and the resource configuration information indicates a time domain resource used for communication and a time domain resource used for positioning.

14. The method according to claim 1, wherein duration for sending the first PSDU is less than first preset duration.

15. The method according to claim 1, wherein the first PHR or the first PSDU in the second physical frame comprises first preamble symbol indication information, the first preamble symbol indication information comprises a quantity of repetitions of a preamble symbol in a SYNC field in a third physical frame and a quantity of repetitions of a preamble symbol in a SYNC field in a fourth physical frame, and the method further comprises:

sending the third physical frame, wherein the third physical frame is sent after the second physical frame; and sending the fourth physical frame, wherein a frame structure of the third physical frame and a frame structure of the fourth physical frame are the first frame structure, and the fourth physical frame is sent after the third physical frame.

16. The method according to claim 1, wherein the first PHR or the first PSDU in the second physical frame comprises second preamble symbol indication information, the second preamble symbol indication information comprises a quantity of repetitions of a preamble symbol in a SYNC field in a third physical frame, and the method further comprises:

sending the third physical frame, wherein a frame structure of the third physical frame is the first frame structure, a second PHR or a second PSDU in the third physical frame comprises third preamble symbol indication information, the third preamble symbol indication information comprises a quantity of repetitions of a preamble symbol in a SYNC field in a fourth physical frame, and the third physical frame is sent after the second physical frame; and sending the fourth physical frame, wherein a frame structure of the fourth physical frame is the first frame structure, and the fourth physical frame is sent after the third physical frame.

17. The method according to claim 1 or 2, wherein the first time interval does not comprise any data field.

18. The method according to claim 3, wherein the first time interval does not comprise any data field; or the first time interval comprises a first padding field, the first padding field comprises a preamble symbol in the synchronization sequence or a preamble symbol in the ranging sequence, and sending duration of the first padding field is the first time interval.

19. The method according to claim 9, wherein the first time interval does not comprise any data field; or the first time interval comprises a second padding field, the second padding field comprises a preamble symbol in the ranging sequence, and sending duration of the second padding field is the first time interval.

20. A communication apparatus, comprising a transceiver unit, a processing unit, and one or more programs, wherein when the processing unit executes the one or more programs, the communication apparatus is enabled to implement the method according to any one of claims 1 to 19.

21. A computer-readable storage medium, wherein the computer-readable storage medium stores instructions; and when the instructions are run on a computer, the computer is enabled to perform the method according to any one of claims 1 to 19.

**22.** A chip or a chip system, comprising a processing circuit and an interface circuit, wherein the interface circuit is configured to receive a code instruction and transmit the code instruction to the processing circuit, and the processing circuit is configured to run the code instruction to perform the method according to any one of claims 1 to 19.

Communication system 10

UWB device 11

UWB device 21

UWB device 12

UWB device 1

UWB device 2

UWB device 13

UWB device 22

FIG. 1A

UWB physical frame

| Synchronization header (SHR) | Physical layer header (PHR) | Physical layer service data unit (PSDU) |
|---|---|---|

FIG. 1B

SHR in a UWB physical frame

| Synchronization (SYNC) field | Start-of-frame delimiter (SFD) field |
|---|---|

FIG. 1C

Synchronization (SYNC) field

| $S_i$ | $S_i$ | $S_i$ | $S_i$ | ... | $S_i$ | $S_i$ | $S_i$ | $S_i$ |

$C_i$

| $C_i(0)$ | $C_i(0)$ | ... | $C_i(K-1)$ |

| $C_i(0)$ | 0 | 0 | ... | 0 | $C_i(0)$ | 0 | 0 | ... | 0 | ... | $C_i(0)$ | 0 | 0 | ... | 0 |

L chips

FIG. 1D

EP 4 387 356 A1

Start-of-frame delimiter (SFD) field

| $a_0S_i$ | $a_1S_i$ | ... | $a_{M-1}S_i$ |
|---|---|---|---|

FIG. 1E

PHR in a UWB
physical frame

FIG. 1F

A UWB
device 1 sends

UWB physical
frame 1

A UWB
device 11 receives

T1

UWB Physical
frame 1

A UWB
device 12 receives

T2

UWB Physical
frame 1

T3

FIG. 1G

| UWB physical frame 2 received by a UWB device 1 | | Synchronization header (SHR) | Physical layer header (PHR) | Physical layer service data unit (PSDU) |
| --- | --- | --- | --- | --- |

| UWB physical frame 3 received by the UWB device 1 | T4 | Synchronization header (SHR) | Physical layer header (PHR) | Physical layer service data unit (PSDU) |
| --- | --- | --- | --- | --- |

FIG. 1H

UWB
physical
frame 5

| Physical layer service data unit (PSDU) |
| Physical layer header (PHR) |
| First time interval |
| Synchronization header (SHR) |

UWB
physical
frame 7

| Physical layer service data unit (PSDU) |
| Physical layer header (PHR) |
| First time interval |
| Synchronization header (SHR) |

First time interval

First time interval

UWB
physical
frame 4

| Physical layer service data unit (PSDU) |
| Physical layer header (PHR) |
| First time interval |
| Synchronization header (SHR) |

UWB
physical
frame 6

| Physical layer service data unit (PSDU) |
| Physical layer header (PHR) |
| First time interval |
| Synchronization header (SHR) |

First time interval

First time interval

First time interval

T4

UWB device 11

UWB device 12

FIG. 1I

```
┌──────────┐                              ┌──────────┐
│   UWB    │                              │   UWB    │
│ device 1 │                              │ device 2 │
└──────────┘                              └──────────┘
      │                                         │
      │       S201: First physical frame        │
      │────────────────────────────────────────▶│
      │        ┌────────────────────────────────────────────┐
      │        │ S202: Determine, based on the first physical│
      │        │ frame, a frame boundary for sending a second│
      │        │ physical frame                              │
      │        └────────────────────────────────────────────┘
      │        ┌────────────────────────────────────────────┐
      │        │ S203: Generate the second physical frame,   │
      │        │ where the second physical frame includes a  │
      │        │ first synchronization header SHR, a first   │
      │        │ physical layer header PHR, and a first       │
      │        │ physical layer service data unit PSDU, and   │
      │        │ there is a first time interval between a      │
      │        │ sending end moment of the first SHR in the    │
      │        │ second physical frame and a sending start     │
      │        │ moment of the first PHR in the second         │
      │        │ physical frame                                │
      │        └────────────────────────────────────────────┘
      │        ┌────────────────────────────────────────────┐
      │        │ S204: Send the second physical frame based   │
      │        │ on the frame boundary for sending the second │
      │        │ physical frame                               │
      │        └────────────────────────────────────────────┘
      │                                         │
```

FIG. 2

SHR in a first
physical frame

| SYNC | | | | | | SFD | | | |
|---|---|---|---|---|---|---|---|---|---|
| $S_i$ | $S_i$ | ... | $S_i$ | $S_i$ | $S_i$ | $S_i$ | $a_0 S_i$ | $a_1 S_i$ | ... | $a_{M-1} S_i$ |

FIG. 3A

Second physical frame

| Synchronization header (SHR) | First time interval | Physical layer header (PHR) | Physical layer service data unit (PSDU) |
|---|---|---|---|

FIG. 3B

Second physical frame

| First time interval | Synchronization header (SHR) | First time interval | Physical layer header (PHR) | Physical layer service data unit (PSDU) |
|---|---|---|---|---|

FIG. 3C

Synchronization (SYNC) field in a second
physical frame used for positioning

| $X_i$ | $X_i$ | ... | $X_i$ | $X_i$ | $X_i$ | $X_i$ | $Y_i$ | $Y_i$ | $Y_i$ | ... | $Y_i$ |
|---|---|---|---|---|---|---|---|---|---|---|---|

Synchronization sequence,
where $X_i$ is a pilot symbol in the
synchronization sequence

First time
interval

Ranging sequence, where $Y_i$ is a
pilot symbol in the ranging sequence

FIG. 3D

| | |
|---|---|
| Synchronization frame | |
| Positioning frame | Time domain resource T6 used to send the positioning frame |
| Positioning frame | |
| Positioning frame | |
| Communication frame | Time domain resource T5 used to send the communication frame |
| Communication frame | |
| Communication frame | |
| Synchronization frame | |

Second physical frame

FIG. 3E

EP 4 387 356 A1

| First time interval | Synchronization sequence | SFD | First time interval | First Sub-PHR | Second Sub-PHR | PSDU | First time interval | Ranging sequence |

Synchronization header (SHR)

Positioning frame

FIG. 3F

EP 4 387 356 A1

Synchronization
header (SHR)

| First time interval | Synchronization sequence | SFD | First time interval | First Sub-PHR | Second Sub-PHR | PSDU |

Communication frame

FIG. 3G

FIG. 3H

FIG. 3I

UWB device 2

Transceiver unit 401

Processing unit 402

Generation subunit 402A

Processing subunit 402B

FIG. 4

UWB device 2

Processor / 500

Instructions

Memory / 504

Instructions

Transceiver / 501

Antenna / 503

FIG. 5

# INTERNATIONAL SEARCH REPORT

| | International application No. |
|---|---|
| | **PCT/CN2022/112255** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: 超带宽, 干扰, 开始, 边界, 结束, 帧, 位置, 物理头, 物理报头, 间隔, 相隔, 间隙, 同步头, 同步报头, 暂停, 静默, UWB, interference, start, end, bord+, frame, location, PHR, SHR, space, interval

**C. DOCUMENTS CONSIDERED TO BE RELEVANT**

| Category* | Citation of document, with indication, where appropriate, of the relevant passages | Relevant to claim No. |
|---|---|---|
| X | US 2021242901 A1 (APPLE INC.) 05 August 2021 (2021-08-05)<br>description, paragraphs [0074]-[0129] | 1-22 |
| A | CN 104335541 A (HUAWEI TECHNOLOGIES CO., LTD.) 04 February 2015 (2015-02-04)<br>entire document | 1-22 |
| A | US 2018132260 A1 (NTT DOCOMO, INC.) 10 May 2018 (2018-05-10)<br>entire document | 1-22 |
| A | US 2011032852 A1 (ZTE CORP.) 10 February 2011 (2011-02-10)<br>entire document | 1-22 |
| A | US 2020067565 A1 (APPLE INC.) 27 February 2020 (2020-02-27)<br>entire document | 1-22 |
| A | US 2013114645 A1 (STICHTING IMEC NEDERLAND) 09 May 2013 (2013-05-09)<br>entire document | 1-22 |

☐ Further documents are listed in the continuation of Box C.       ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 October 2022** | **25 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

| International application No. |
| --- |
| **PCT/CN2022/112255** |

| Patent document cited in search report | | | Publication date (day/month/year) | Patent family member(s) | | | Publication date (day/month/year) |
| --- | --- | --- | --- | --- | --- | --- | --- |
| US | 2021242901 | A1 | 05 August 2021 | CN | 113206723 | A | 03 August 2021 |
| | | | | DE | 102021102288 | A1 | 05 August 2021 |
| | | | | US | 2022131568 | A1 | 28 April 2022 |
| CN | 104335541 | A | 04 February 2015 | WO | 2014190495 | A1 | 04 December 2014 |
| US | 2018132260 | A1 | 10 May 2018 | MX | 2017013990 | A | 14 March 2018 |
| | | | | EP | 3337257 | A1 | 20 June 2018 |
| | | | | CN | 107736063 | A | 23 February 2018 |
| | | | | JP | WO2017026399 | A1 | 07 June 2018 |
| | | | | WO | 2017026399 | A1 | 16 February 2017 |
| US | 2011032852 | A1 | 10 February 2011 | WO | 2009103234 | A1 | 27 August 2009 |
| US | 2020067565 | A1 | 27 February 2020 | | None | | |
| US | 2013114645 | A1 | 09 May 2013 | WO | 2011161095 | A1 | 29 December 2011 |
| | | | | JP | 2013535153 | A | 09 September 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110967101
- CN 202111166841